# EUROPÄISCHE PATENTSCHRIFT

(11) **EP 1 393 173 B1**
(45) Veröffentlichungstag und Bekanntmachung des Hinweises auf die Patenterteilung: **29.03.2006**
(21) Anmeldenummer: 02726088.4
(22) Anmeldetag: 13.05.2002
(51) Int. Cl.: G06F 9/46, G06F 13/16

(54) **ANORDNUNG ZUR ABARBEITUNG VON DATENVERARBEITUNGSPROZESSEN SOWIE VERFAHREN ZUR ERMITTLUNG DER OPTIMALEN ZUGRIFFSSTRATEGIE**
CONFIGURATION FOR EXECUTING DATA PROCESSING PROCESSES AND METHOD FOR DETERMINING THE OPTIMAL ACCESS STRATEGY
ENSEMBLE POUR EXECUTER DES PROCESSUS DE TRAITEMENT DE DONNEES, PROCEDE POUR DETERMINER LA STRATEGIE D'ACCES OPTIMALE

(30) Priorität: 21.05.2001 DE 10124767
(43) Veröffentlichungstag der Anmeldung: 03.03.2004
(73) Patentinhaber: Infineon Technologies AG, 81669 München (DE)
(72) Erfinder: BENEDIX, Alexander, 81739 München (DE); BRAUN, Georg, 80339 München (DE); KLEHN, Bernd, 82008 Unterhaching (DE)
(74) Vertreter: Epping - Hermann - Fischer
(86) Internationale Anmeldenummer: PCT/DE2002/001715
(87) Internationale Veröffentlichungsnummer: WO 2002/095582

(56) Entgegenhaltungen:
- EP-A- 0 917 057
- WO-A-00/67124
- US-A- 6 052 134

## Beschreibung

Die Erfindung betrifft ein Verfahren zur Ermittlung der optimalen Zugriffsstrategie in einer Anordnung zur Abarbeitung von Datenverarbeitungsprozessen, in der ein Betriebssystem während der Ausführung einer Applikation Systemprozesse durch eine oder mehrere Systemressourcen abarbeiten läßt.

Die Leistungsfähigkeit beziehungsweise die Schnelligkeit von Applikationen hängt mitunter stark davon ab, wie vorhandene Systemressourcen eines Systems angesprochen werden. So gibt es zum Beispiel Programme, bei denen es Sinn macht, die Bänke des Hauptspeichers (DRAM) nach dem ersten Zugriff offen zu lassen. Andere Programme wiederum sind dann besonders schnell, wenn die Bänke der DRAMs unmittelbar nach dem ersten Zugriff wieder geschlossen werden.

Eine optimale Zugriffsstrategie auf den Hauptspeicher läßt sich nicht für alle Applikationen und alle denkbare Systeme definieren. Dennoch ist es erstrebenswert, für jede Kombination aus System und Applikation die jeweils optimale Zugriffestrategie anzuwenden.

Bisher wurde die Zugriffsstrategie zum Beispiel auf dem Hauptspeicher im Chipsatz eines Systems (PC, Workstation) per Hardware festgelegt. Die hardwaremäßige festgelegte Zugriffsstrategie hat den Nachteil, daß diese voreingestellt ist und nicht an die jeweilige Applikation angepaßt werden kann.

Aus der US 6 052 134 A sind verschiedene Zufriffstrategien bekannt, die abhängig von der jeweiligen Applikation eingestellt werden können.

Jedoch ist es für einen Benutzer immer noch äußerst schwierig und aufwendig die optimale Zugriffsstrategie zu ermitteln.

Der Erfindung liegt daher die Aufgabe zugrunde ein Verfahren, zur Ermittlung der optimalen Zugriffsstrategie in Abhängigkeit von System und Applikation aufzuzeigen.

Diese Aufgabe wird erfindungsgemäß dadurch gelöst, daß
a) ein Systemprozeß
b) auf einer Systemressource
c) mit verschiedenen Zugriffestrategien abgearbeitet wird und
d) jeder Zugriffsstrategie ein Wert zugeordnet wird, der abgespeichert wird und welcher der Ausführungsgeschwindigkeit der Applikation entspricht und
e) nach Testung aller Zugriffsstrategien diejenige mit dem besten Wert als Standardstrategie festgelegt wird.

Durch die Implementierung einer Vielzahl von Zugriffsstrategien ist es möglich, jeweils die optimale Zugriffsstrategie für jede Applikation auszuwählen.

Vorzugsweise erfolgt die Ermittlung der optimalen Zugriffsstrategie für eine bestimmte Applikation nur zu bestimmten Anlässen, nämlich dann, wenn der Benutzer gewillt ist, den Zeitaufwand für die Ermittlung der optimalen Zugriffsstrategie zu akzeptieren. Dies ist insbesondere dann, wenn der Benutzer eine neue Applikation installiert und dafür ohnehin Zeit aufwenden muß, oder wenn der Benutzer eine neue Hardware installiert und die bereits vorhandene Software für die neue Hardware optimieren will, oder wenn neue, verbesserte Zugriffsstrategien für das System bereitgestellt werden.

Die Festlegung der optimalen Zugriffsstrategie kann in einfachen Systemen mit nur einem Prozessor erfolgen, jedoch auch ebenso in komplexeren Systemen mit einer Vielzahl von Systemressourcen.

Vorzugsweise wird bei komplexeren Systemen mit mehreren Systemressourcen für jede Systemressource pro Applikation die optimale Zugriffsstrategie ermittelt und festgelegt.

Nachfolgend wird die Erfindung anhand eines in den Zeichnungen dargestellten Ausführungsbeispieles näher erläutert.

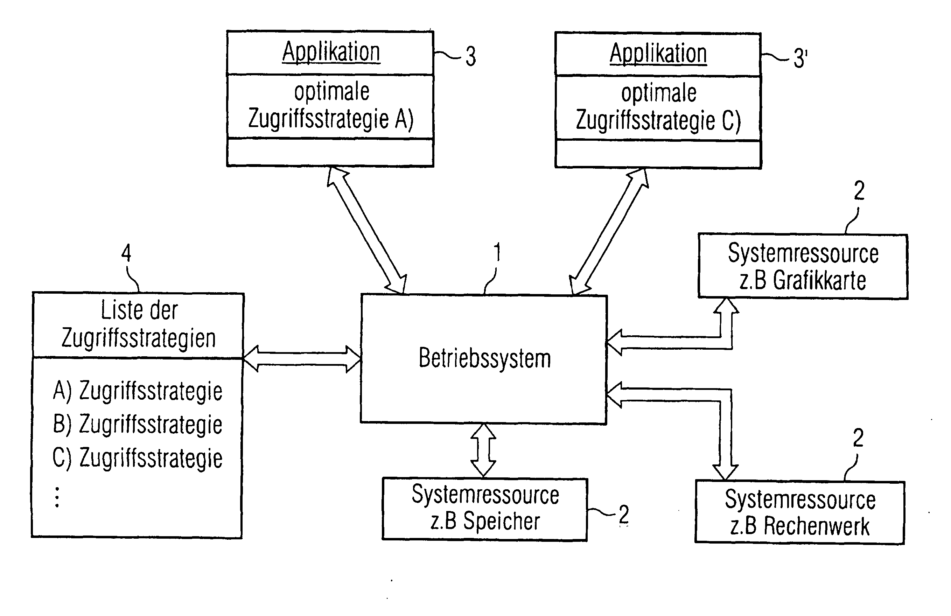

In den Zeichnungen zeigt die einzige Figur 1 schematisch eine erfindungsgemäße Anordnung.

In Figur 1 ist prinzipiell eine erfindungsgemäße Anordnung zur Abarbeitung von Datenverarbeitungsprozessen dargestellt. Eine derarte Anordnung wird in der Regel in einem PC oder einer Workstation verwendet.

Auf jedem PC beziehungsweise jeder Workstation ist ein Betriebssystem 1 installiert, welches zur Abarbeitung von Systemprozessen auf sogenannte Systemressourcen 2 zugreift, welche die Abarbeitung der Systemprozesse übernehmen.

Eine Systemressource 2 ist zum Beispiel der Prozessor oder der Hauptspeicher (DRAM) oder ein Rechenwerk, wie Integer oder Fließkommarrechenwerk oder zum Beispiel die Grafikkarte oder der Prozessor auf der Grafikkarte.

Läßt man nun ein Anwendungeprogramm oder eine Applikation 3 beziehungsweise 3' auf dem PC beziehungsweise der Workstation ablaufen, so hängt die Ausführungsgeschwindigkeit der Applikation 3 beziehungsweise 3' stark davon ab, welche Zugriffsstrategie A, B, C, ... zu den Systemressourcen 2 gewählt wird.

Es gibt zum Beispiel Applikationen, bei denen es Sinn macht, die Bänke des Hauptspeichers (DRAM) nach dem ersten zugriff offen zu lassen. Andere Programme wiederum sind dann besonders schnell, wenn die Bänke der DRAMs unmittelbar nach dem ersten Zugriff wieder geschlossen werden.

Erfindungsgemäß ist daher das Betriebssystem 1 mit einer Liste 4 von Zugriffsstrategien A, B, C, ...., verbunden, die jeweils bei der Ausführung einer Applikation 3, 3' zum Zugriff auf die einzelnen Systemressourcen 2 verwendet werden können.

Bei der Ermittlung der optimalen Zugriffsstrategie für eine Applikation werden alle zur Verfügung stehenden Zugriffsstrategien auf den Systemressourcen getestet. Zu jeder Zugriffsstrategie wird ein Testlauf der Applikation durchgeführt. Nach jedem Testlauf wird ein Wert gespeichert, der der Ausführungsgeschwindigkeit der Applikation entspricht.

Nachdem alle Zugriffsstrategien durchgeführt und getestet sind, wird diejenige Strategie, die den besten Performancewert hatte, als Standardstrategie für die getestete Applikation abgespeichert. Die Applikation wird ab diesem Zeitpunkt mit der zugehörigen Strategie ausgeführt.

Für die Auswahl der Zugriffsstrategie bestehen zwei Alternativen. Entweder wird die gesamte Applikation mit einer einzigen Zugriffsstrategie für alle Systemressourcen durchgeführt und diejenige verwendet, welche bei allen Systemressourcen in Kombination das beste Ergebnis liefert oder das Prozedere wird pro Systemressource durchgeführt und für jede Systemressource die optimale Zugriffsstrategie für die entsprechende Applikation ermittelt.

Die Ermittlung der optimalen Zugriffsstrategie für bestimmte Applikationen wird nur zu bestimmten Anlässen durchgeführt, nämlich dann, wenn der Benutzer gewillt ist, den Zeitaufwand für die Ermittlung der optimalen Strategie zu akzeptieren. Dies ist in der Regel bei der Installation einer neuen Hardware oder Installation einer neuen Software oder auch der Installation von neuen Zugriffsstrategien für das System.

Das oben beschriebene Verfahren zur Ermittlung der optimalen Zugriffsstrategie für eine Applikation hat den Vorteil, daß dieses Verfahren auf einfachen Systemen (Singleprozessorsysteme) ebenso wie auf Multiprozessor- beziehungsweise Multiressourcensystemen angewendet werden kann.

Ein weiterer Vorteil dieses Verfahrens liegt darin, daß es vom Benutzer nur zu definierten Anlässen durchgeführt werden kann und somit während der normalen Laufzeit keine Systemressourcen beansprucht.

## Patentansprüche

1. Verfahren zur Ermittlung der optimalen Zugriffsstrategie (A, B, C, ...) in einer Anordnung zur Abarbeitung von Datenverarbeitungsprozessen, in der ein Betriebssystem (1) während der Ausführung einer Applikation Systemprozesse (2) durch eine oder mehrere Systemressourcen (2) abarbeiten läßt,
**dadurch gekennzeichnet, daß** eine Applikation (3, 3') oder ein Systemprozeß auf einer Systemressource (2) mit verschiedenen Zugriffsstrategien (A, B, C, ...) abgearbeitet wird und jeder Zugriffsstrategie ein Wert zugeordnet wird, der abgespeichert wird und welcher der Ausführungsgeschwindigkeit der Applikation oder des Systemprozesses entspricht und nach der Testung aller Zugriffsstrategien diejenige mit dem besten Wert als Standardzugriffsstrategie festgelegt wird.

2. Verfahren nach Anspruch 1,
**dadurch gekennzeichnet, daß**
die optimale Zugriffsstrategie jederzeit durch den Benutzer des Systems ermittelbar ist.

3. Verfahren nach Anspruch 2,
**dadurch gekennzeichnet, daß**
bei mehreren Systemressourcen für jede einzelne Systemressource eine optimale Zugriffsstrategie ermittelbar ist.

4. Verfahren nach Anspruch 1 bis 3,
**dadurch gekennzeichnet, daß**
für eine Applikation eine einheitliche optimale Zugriffsstrategie für alle Systemressourcen ermittelbar ist.

## Claims

1. Method for determining the optimum access strategy (A, B, C, ...) in an arrangement for executing data processing processes, in which an operating system (1) allows system processes (2) to be executed by one or more system resources (2) during the execution of an application, **characterized in that** an application (3, 3') or a system process is executed on a system resource (2) with various access strategies (A, B, C, ...), and each access strategy is assigned a value which is stored and which corresponds to the execution speed of the application or of the system process, and after the testing of all the access strategies, the access strategy with the best value is defined as the standard access strategy.

2. Method according to Claim 1, **characterized in that** the optimum access strategy can be determined at any time by the user of the system.

3. Method according to Claim 2, **characterized in that**, when there are a plurality of system resources, an optimum access strategy can be determined for each individual system resource.

4. Method according to Claim 1 to 3, **characterized in that** a uniform optimum access strategy can be determined for all the system resources for an application.

## Revendications

1. Procédé de détermination de la stratégie (A, B, C, ...) la meilleure possible d'accès dans un dispositif d'élaboration de processus informatiques, dans lequel un système (1) de fonctionnement permet d'élaborer pendant la réalisation une application des processus (2) de système par une ou par plusieurs ressources (2) de système,
**caractérisé en ce qu'**on élabore une application (3, 3') ou un processus de système sur une ressource (2) de système avec diverses stratégies (A, B, C, ...) d'accès et on associe à chaque stratégie d'accès une valeur que l'on mémorise et qui correspond à la vitesse de réalisation de l'application ou du processus de système et après avoir testé toutes les stratégies d'accès, on fixe celle ayant la valeur la meilleure comme étant la stratégie d'accès standard.

2. Procédé suivant la revendication 1,
**caractérisé en ce que** la stratégie d'accès la meilleure peut être déterminée à tout instant par l'utilisateur du système.

3. Procédé suivant la revendication 2,
**caractérisé en ce que** l'on peut déterminer, s'il y a plusieurs ressources de système, pour chaque ressource de système individuelle, une stratégie d'accès qui est la meilleure.

4. Procédé suivant la revendication 1 à 3,
**caractérisé en ce que** pour une application on peut déterminer une stratégie d'accès unitaire la meilleure pour toutes les ressources du système.
